# EUROPEAN PATENT SPECIFICATION

(11) **EP 2 265 761 B1**
(45) Date of publication and mention of the grant of the patent: **29.10.2014**
(21) Application number: 09725198.7
(22) Date of filing: 30.03.2009
(51) Int. Cl.: D21H 27/28, B32B 27/10, D21H 19/66, B32B 5/02, B32B 29/00, D21H 19/80, B32B 5/16, B32B 33/00, D21H 19/82, B32B 27/04, B32B 38/08, D21H 21/18, B32B 27/06, B32B 27/08, D21H 17/68

(54) **METHOD FOR MANUFACTURING AN OVERLAYING MATERIAL**
VERFAHREN ZUR HERSTELLUNG EINES OVERLAY-MATERIALS
PROCÉDÉ POUR FABRIQUER UN MATÉRIAU DE REVÊTEMENT

(30) Priority: 28.03.2008 AU 2008901495
(43) Date of publication of application: 29.12.2010
(73) Proprietor: Depco-Trh Pty Ltd, Williamstown, Victoria 3016 (AU)
(72) Inventor: PRICE, David Elwyn, Williamstown Victoria 3016 (AU)
(74) Representative: Demski, Siegfried
(86) International application number: PCT/AU2009/000377
(87) International publication number: WO 2009/117782

(56) References cited:
- EP-A1- 0 329 154
- WO-A1-93/17182
- WO-A1-97/00172
- WO-A1-99/39052
- US-A- 3 373 071
- US-A- 5 034 272
- US-A- 5 344 704
- US-A- 5 545 476
- US-A1- 2003 113 513
- US-A1- 2004 115 399
- US-A1- 2004 253 424
- US-A1- 2005 175 779
- US-B1- 6 835 421

## Description

### Field of the invention

The invention relates to an abrasion and scratch resistant overlay with improved transparency, and to a method for manufacturing an overlay suitable for use in turn in the manufacture of a laminate, and to a highly transparent abrasion and scratch resistant overlay produced by the method. Also disclosed are laminate products incorporating the overlay.

### Background of the invention

For the manufacture of laminates such as laminate flooring a decorative base paper, usually with a printed design, and an overlay paper are impregnated with a resin in which these overlaying materials serve as a carrier for a so-called pre-polymer resin material. For laminate flooring a balancing paper is placed on the non-decorative side of the laminated substrate. To improve the abrasion and scratch resistance of the final laminate hard particles such as corundum are incorporated in the surface layer above the printed design. These paper carrier materials also impart an internal stability to the final cured resin through their fibrous structure. In the manufacture of low pressure melamine flooring (LPM-flooring), also known as direct pressure melamine (DPL) and thermo-fused melamine (TFM), the overlaying paper or papers impregnated with resin starting material and partially cured are pressed onto a substrate in a hot press where the resin flows and bonds the carrier materials to the substrate and is cured to its final state to form the laminate.

In the manufacture of high pressure laminates (HPL) several resin impregnated kraft papers are assembled to form the substrate or core material and a resin impregnated décor paper is placed above the kraft papers. In some cases, for instance when a printed décor paper is used, a resin impregnated clear overlay paper is placed above the décor paper to provide wear protection for the print. Furthermore, in some cases the decorative paper is not impregnated and the clear overlay provides sufficient resin and the high pressure press sufficient pressure to form a uniformly impregnated HPL, this process being known as dry pressing. Hard particles such as corundum, also known as fused alumina, may be included in or on the clear overlay paper, or directly on the impregnated printed paper.

In another process known as continuous pressure laminate (CPL), the impregnated decorative paper and impregnated kraft paper or papers, and optionally an impregnated clear overlay paper, are fed from rolls into a double band hot press. The pressure and heat bonds the impregnated papers into a continuous laminate. Alternatively the impregnated papers may be applied directly and simultaneously onto a wood based panel substrate within the continuous press. Hard particles such as corundum may be included in or on the décor paper or overlay paper.

Various methods are known for applying the hard particles such as corundum into the surface of the laminate. For example, a décor paper or an overlay paper can include hard particles on the surface of the impregnated paper to enhance the abrasion resistance of the laminate surface. The hard particles may be applied wet-on-wet to a first stage impregnated paper using a device such as a slotted die applicator, for example that known as an ARP and available from the company Vits, Langenfeld Germany. Following wet-on-wet application of the resin and hard particle mixture the impregnated paper is dried to the required b-stage.

The prior art for application of the hard particle and resin mixture advantageously avoids a further contact between the asymmetric hard particle coated paper and gravure rolls, due to the aggressively abrasive nature of the hard particles. It is disclosed in the abstract of EP0837771 that "one side of the web is coated with hard particles with a size of 30 - 90 mu m. After drying the other side is coated with a melamine formaldehyde resin containing hard particles with an average particle size of 1 - 15 mu m". In the examples provided in EP0837771 the drying of the impregnated paper is after the hard particles have been applied.

The resin used for the resin and hard particle coating is chosen to be compatible with the first impregnation resin, for example, a water based melamine formaldehyde (MF) resin may be used in both the impregnation step and the coating step. It is not necessary that the resins are the same, however it is necessary that the resins are compatible to avoid later problems such as delamination. This is also relevant to any coatings subsequent to the first coating. After impregnation and curing to the desired b-stage the materials are laid onto a substrate, for example high density fibreboard (HDF), and are bonded to the substrate in a hot press where the partially cured resin cures from its b-stage to its final state. It is also practical that a glue is used to adhere the impregnated paper to the woodpanel substrate. To avoid excessive wear of the structure and gloss on the pressplate the corundum coated side of the overlay paper is usually against the printed design.

US patent application 2004/0115399 discloses a concept of coating a resin-impregnated decor paper prepreg with an abrasion resistant overlay comprising an ionomeric thermoplastic. In one arrangement a thus coated prepreg is laid on a further décor paper resin-impregnated prepreg. Hard particles are provided either in a prepreg that is coated with the ionomeric thermoplastic, or in a separate overlay on the ionomeric layer.

US patent application 2005/0175779 discloses pre-treatment of a paper substrate with polyvinyl alcohol before it is coated with a thermosetting resin containing abrasion resistant particles, preferably in a wet on wet process. There is thereafter an optional overlay resin containing glass microspheres.

US patent 5344704 discloses a much thicker overlay (eg 10 times that typical of ARP technology) by employing as the abrasion resistant particles pre-cured melamine particles in a binder of microcrystalline cellulose, which may also optionally contain alumina particles. This slurry is applied to produce a protective layer on a melamine impregnated décor paper, and the assembly is laminated with a kraft paper substrate in the conventional manner in a hot press. International patent application WO 99/39052 proposes a modification of this structure in which there are no mineral particles and a higher loading of resin particles.

US patent application US 2004/0115399 A1 discloses a method for producing decorative abrasion-resistant flooring laminates. The process is characterized in that a paper web or a paper sheet impregnated with a thermosetting resin is provided on one side with a surface layer consisting of an ionomeric thermoplastic. Additionally, abrasion-resistant materials can be distributed within the overlay paper or in a layer of resin on the paper, on which the surface layer is applied.

US patent US 6,835,421 B1 discloses a method for producing highly wear-resistant flooring materials. According to this document a paper is impregnated with a resin and subsequently a dispersion containing an abrasive substance is sprayed onto the impregnated wet paper.

Document WO 93/17182 discloses a method for producing impregnated laminates, especially for applying abrasion-resistant particles to a surface sheet of the laminate. According to this document a web is impregnated with a resin, subsequently a slurry including abrasion-resistant materials is sprayed onto the impregnated web, and, in a further aspect, subsequently a coating of resin is applied to the partially dried web with the abrasion-resistant material on its surface.

It is an object of the invention to provide an improved transparent overlay or decor paper surface for a laminate product, especially a decorative laminate product, and an improved method of manufacturing such an overlay or décor paper surface. In one application, it is an objective to provide an overlay that can be used advantageously to provide improved technical properties such as transparency, abrasion and scratch resistance to the surface of a decorative laminate.

It is not admitted that any of the information in this specification is common general knowledge, or that the person skilled in the art could be reasonably expected to have ascertained, understood, regarded it as relevant or combined it in any way at the priority date.

### Summary of the invention

It hast been discovered in a first aspect of the invention that an advantage over the prior art in the method of manufacturing abrasive resistant laminates is to provide a drying step and optionally an additional coating or coatings between the first impregnation and the application of the hard particle medium whereby improved transparency as well as both abrasion resistance and scratch resistance are achieved.

The invention accordingly provides, in a first aspect, a method of manufacturing a laminate incorporating a highly transparent abrasion and scratch resistant overlay or a highly transparent abrasion and scratch resistant decor paper surface, comprising:
impregnating a paper with a first resin to produce a first stage impregnated paper substrate;
partially drying the first stage impregnated paper substrate;
applying to the partially dried first stage substrate at least one coating of a second resin compatible with the first resin;
applying to said at least one coating, in a wet on wet process, a liquid resin layer containing hard particles for abrasion resistance, whereby to produce a composite paper;
drying and at least partially curing said composite paper to the required b-stage; and
forming in a hot press a laminate that includes the composite paper.

In another aspect, the invention provides a highly transparent abrasion and scratch resistant overlay or a highly transparent abrasion and scratch resistant décor paper surface, the overlay or decor paper surface comprising a dried and at least partially cured composite paper that includes :-
a paper substrate impregnated with a first resin and partially dried;
applying a coating on both sides of said impregnated paper substrate, said coating comprising a second resin compatible with the first resin; and
over said coating, a liquid resin layer containing hard particles for abrasion resistance; and
optionally a protective coating applied to the composite paper.

The partially drying of the first stage impregnated paper substrate is thought to provide a core impregnation with the water substantially removed, giving a better transparency.

The coating of the second resin may be at least partially dried before application of the liquid resin layer. It is thought that this step may further enhance transparency.

The first resin, the second resin coating, and the liquid resin layer may be partially intermingled at their interfaces in the composite product.

In an embodiment, the second resin is applied to one side of the first stage impregnated paper substrate. Alternatively, the second resin is applied to both sides. The second resin may be partially curable using ultraviolet radiation, and may contain additives to provide technical properties other than scratch resistance.

Other technical parameters may be achieved by different additives in said coating(s) or said layer. Under controlled circumstances this does not create an incompatible surface, for example non-wetting of the surface and an uneven application of the coating resin and hard particles.

In an advantageous embodiment the second resin includes hard particles that overall are smaller than the hard particles of the liquid resin layer. There is thereby applied a pre-coating of small hard particles that results in an overlay that has an outer as well as an inner coating of small hard particles in addition to the layer of larger hard particles. The selection of suitable particle sizes would enable technical parameters such as scratch resistance to be improved without detrimental effects to the embossed pressplate.

The application of the liquid resin layer containing hard particles is preferably by means of a slotted die applicator, for example an ARP unit.

The respective partial drying steps are each advantageously carried out with near infrared (NIR) irradiation. NIR irradiation is effective to reduce volatile content without incurring significant curing of the respective resin content as disclosed in applicant's International patent application WO2007/065222.

The coating of the second resin may be applied, by means of, for example, a curtain coater, spray coater, gravure rollers or reverse rollers.

The liquid resin layer containing hard particles is preferably a third resin compatible with the second resin and preferably with the first. The amount of resin and hard particles will advantageously be determined by the desired abrasion class according to EN 13329.

The composite laminate may be subsequently dried and the cure of the resins advanced to the b-stage.

The various hard particles may be corundum, or glass or synthetic particles. Corundum particles may be selected by particle shape to enhance alignment and abrasion resistance.

In an advantageous embodiment of the invention the use of a scratch resistant coating applied to both sides of the impregnated paper also provides additional abrasion resistance.

In a further advantageous embodiment, a protective coating may be applied after the ARP unit to provide additional protection to the lamination tool, for example a pressplate or hot roll.

The respective resins may be an amino resin such as melamine formaldehyde (MF) resin or another amino resin such as urea formaldehyde (UF) or phenol formaldehyde (PF) or mixtures of these. Such resins or resin mixtures may be used in the first stage to saturate the paper after which a set of metering rolls are used to control the resin pick-up before passing the first stage impregnated paper through a drying section, preferably an NIR irradiation station. After the drying station it may be advantageous to cool the web before presenting the first stage impregnated paper to a series of coating rolls where a coating of hard particles in a compatible resin mixture is applied to one or both sides of the web. The impregnated paper is now wet again and can be presented to the ARP section for a wet-on-wet application of hard particles mixed in a compatible resin. Alternatively the impregnated and coated paper may be passed through a drying section, preferably an NIR irradiation station, before presenting the impregnated and coated paper to the ARP section. It is also practical that the coating of small hard particles is contained in a compatible resin that can be partially cured by UV radiation which is disclosed in the applicants patent EP1595718.

By using the method according to the invention, an overlaying paper with a fibrous structure having two or more coatings after the first impregnation is used to stabilize the surface of the laminate against scratching and abrasion. In a particular embodiment according to the invention, a paper is impregnated with an amino resin and the volatile content reduced, preferably using NIR irradiation, thereafter the first stage impregnated paper is again dipped into an amino resin bath and fully saturated with resin. Depending on the particular end application the paper may be coated in a subsequent process step with the coating resin containing one or several additives, such as but not limited to hard particles or antimicrobial or antistatic or conductive or laser sensitive additives.

In a particular embodiment, the overlay paper is preferably impregnated with an amino resin and the initial volatile content reduced using NIR irradiation followed by a coating on one or both sides with a resin containing hard particles of corundum which are not more than 50µm, preferably not more than 30µm, most preferably not more than 20µm. The hard particles may preferably be treated to enhance clarity; such treatments are well known and are usually a silane pre-treatment. Following the coating step the wet impregnated overlay paper is presented to the ARP coating section and a coating is applied wet-on-wet to one side of the previously impregnated and coated overlay paper. The ARP coating usually contains a mixture of resin and hard particles, the hard particles usually being corundum and usually of a particle size greater than 20µm, preferably greater than 50µm, most preferably greater than 60µm. The hard particles used in the ARP system may preferably be treated to enhance clarity; such treatments are well known and are usually a silane pre-treatment.

It is well known that other particles and additives may be added to the coating resin mixture, for example but not limited to glass beads, synthetic particles, or micro-cellulose or other cellulose based products.

In another embodiment according to the invention a cathode and an anode are placed after the ARP coating unit, above and below the moving web and an electrical charge applied. The corundum particles become oriented by means of the charge on the particle.

It is obvious to a skilled person that the objects of the invention could be applied singularly to a decorative paper thereby reducing, or avoiding the need for an overlay paper.

In another embodiment according to the invention, a printed décor paper is impregnated with a resin and partially dried, preferably using NIR irradiation. Thereafter, the first stage impregnated paper is coated on both sides, or for economical reasons only on the décor side, with a resin compatible with the first resin and compatible with the ARP resin. The impregnated and coated paper is then presented to an ARP coater and an abrasive coating of resin and hard particles applied to the printed décor side. The impregnated and several times coated paper may then be laminated with a resin starved clear overlay paper, preferentially laminated with an unimpregnated overlay paper. The unimpregnated overlay paper may according to desired technical parameters have been previously coated with a melamine, for example melamine powder or a melamine formaldehyde powder. The melamine powder or the MF powder may contain additives such as but not limited to antistatic agents or antibacterial agents to provide specific properties desired in the final laminate surface.

In an embodiment, a lacquer may be applied to the composite paper before or after hot pressing. In the latter case, the lacquer may be applied after cutting the hot pressed laminate into small pieces, preferably after the smaller pieces have had further profiling. For example, by regulating the amount of melamine or melamine formaldehyde powder on the surface of the unimpregnated overlay, it is possible to achieve a surface that is receptible to a lacquer coating. This lacquer coating can be applied before the unimpregnated overlay is applied in the hot press or subsequent to the hot pressing step. The lacquer may be applied by vacuum deposition, and may be applied to more than one surface of the laminate.

The applicant has in International patent application WO2006/130907 disclosed vapour deposition of melamine powder. It has been shown that a paper (65gsm 40% ash content produced by Munksjö Unterkochen Germany) coated with approximately 4gsm melamine powder and not further coated or impregnated does when pressed above an impregnated paper provide a surface which can be further coated. Amongst coatings that are useful to the invention are those which provide a different haptic to the laminate surface, such as but not restricted to acrylic lacquers. The coating may be applied by any method for example but not limited to spraying, roller, curtain or vacuum coating.

In another embodiment of the invention preference is given to applying the coating to the pressed and profiled laminate by vacuum coating as this enables the edges as well as the upper and lower surfaces to be coated. Sealing of the profiled edges provides additional protection against moisture ingress.

The raw overlay paper usually has a grammage between 10 g/m² and 75 g/m².

The raw decorative paper usually has a grammage between 35 g/m² and 250 g/m².

The balancing paper may have a grammage between 35g/m² and 250 g/m² and may be impregnated with an appropriate amino resin such as urea formaldehyde, melamine formaldehyde, phenol formaldehyde or a mixture of these. The objective of the balancing paper is to counter-act tension from the decorative side and maintain the panel flat within the meaning ascribed in EN 13329.

Impregnated papers used for technical laminates such as but not limited to concrete shuttering boards or truck flooring boards may also be manufactured according to the method of the invention.

The further partial drying and curing of the impregnated and coated overlay paper can be by the usual means of a hot air oven or may be by radiation such as NIR irradiation or may be a combination of these to reach the desired volatile content in the b-stage product.

In this document the term overlaying material has been used as a synonym for overlay paper, decorative base paper, printed decorative base paper and non-woven materials. The term resin and polymer have been used as synonyms for each other and includes resin dimers, trimers and oligomers.

As used herein, except where the context requires otherwise the term "comprise" and variations of the term, such as "comprising", "comprises" and "comprised", are not intended to exclude other additives, components, integers or steps.

### Brief description of the drawings

Preferred embodiments of the present invention will now be described by way of example only with reference to the accompanying drawings, in which:

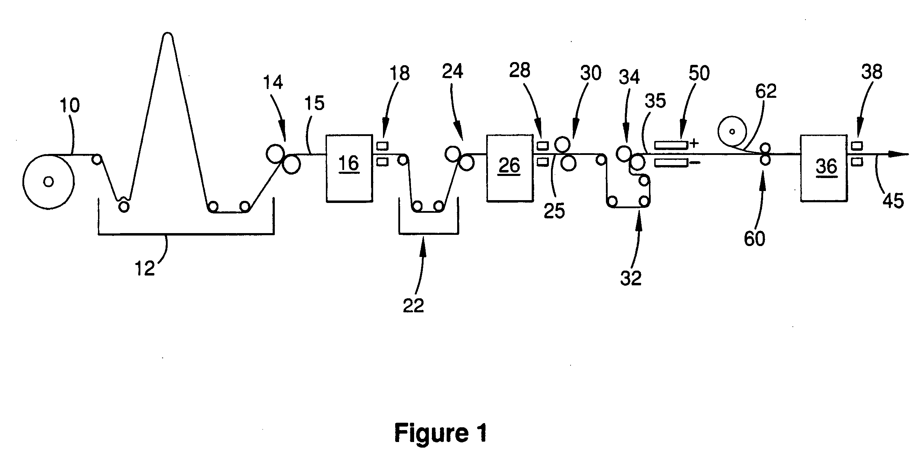

Figure 1 is a schematic diagram of a process according to an embodiment of the invention. It is obvious to a skilled person that the layout can be varied to achieve desired final properties in an impregnated paper;
Figure 2 is an exploded schematic layer diagram of a flooring laminate according to the prior art; and
Figures 3 and 4 are exploded schematic layer diagrams of flooring laminates according to embodiments of the invention.

### Description of embodiments of the invention

Raw overlay paper 10 is impregnated in a first bath 12 with an amino resin such as MF, UF or PF. The selected resin saturates the paper, after which a set of metering rolls 14 are used to control the resin pick-up. The thus impregnated paper 15 then passes through a first drying station 16, preferably an NIR irradiation station, wherein impregnated paper 15 is partially dried.

After the drying station, the paper is cooled at 18 and passed to a second bath 22 where a second resin compatible with the first resin is applied as a coating to the partially dried first stage impregnated paper 15. After a further set of metering rolls 24, an NIR drying station 26 and a cooling unit 28, the paper 25 transverses gravure rolls 30 and is then presented to an ARP coating unit 32, with downstream metering rolls 34, where in a wet on wet process a liquid resin layer containing hard particles such as corundum is applied to the aforedescribed coating.

After the ARP coating unit 32, the composite paper 35 now produced is passed between a cathode and an anode at station 50 for application of an electrical charge to orient the hard particles. Thereafter, the composite paper 35 is laminated at 60 with an unimpregnated overlay 62 optionally treated as earlier described, before further treatment in an NIR drying station 36 to dry and at least partially cure the overlaid composite paper 35 to the required b-stage paper 45. B-stage paper 45 is cooled in cooling unit 38.

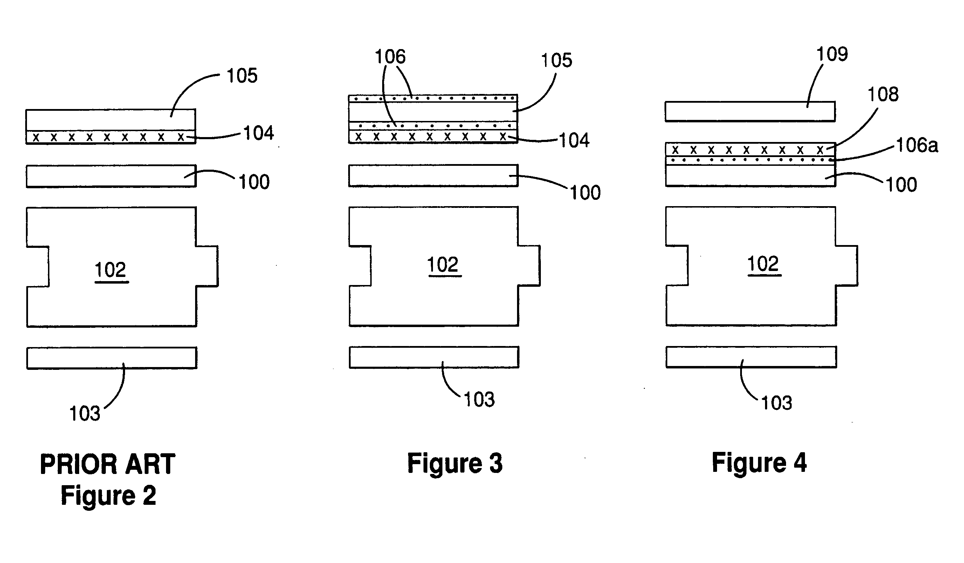

The exemplary composite papers depicted in Figures 3 and 4, and the comparative exemplary prior art structure illustrated in Figure 2, can be understood from the following code for the reference numerals employed in these diagrams:-
- 100: resin-impregnated printed decor paper
- 102: substrate
- 103: backer paper
- 104: abrasion resistant coating containing hard particles applied by ARP
- 105: impregnated overlay paper
- 106: scratch resistant layer
- 106a: one-side scratch resistant coating
- 108: abrasion resistant layer, applied by ARP
- 109: unimpregnated overlay

## Claims

1. A method of manufacturing a laminate incorporating a highly transparent abrasion and scratch resistant overlay or a highly transparent abrasion and scratch resistant decor paper surface, comprising:
impregnating a paper with a first resin to produce a first stage impregnated paper substrate;
partially drying the first stage impregnated paper substrate;
applying to the partially dried first stage substrate at least one coating of a second resin compatible with the first resin;
applying to said at least one coating, in a wet on wet process, a liquid resin layer containing hard particles for abrasion resistance, whereby to produce a composite paper;
drying and at least partially curing said composite paper to the required b-stage; and
forming in a hot press a laminate that includes the composite paper.

2. The method according to claim 1 wherein said coating of the second resin is applied to both sides of the first stage impregnated and partially dried paper substrate and the second resin is optionally partially dried.

3. The method according to claim 2 wherein said coating of the second resin is partially curable using UV radiation.

4. The method according to any one of claims 1 to 3 wherein the coating resin contains any of hard particles, cellulose-based, antimicrobial, antistatic, conductive or laser sensitive additives.

5. The method according to claim 4 wherein the hard particles of the coating resin are selected from corundum, glass or synthetic particles.

6. The method according to claim 5 wherein the corundum particles of the coating resin are of a size not more than 50µm.

7. The method according to claim 1 wherein the hard particles of the liquid resin layer are corundum.

8. The method according to claim 7 wherein the corundum particles in the liquid resin layer are of a size greater than 20µm.

9. The method according to any of claims 5 to 8 wherein the corundum particles are aligned by passing the composite paper between a cathode and an anode situated after an ARP unit.

10. The method according to claim 1 wherein a protective coating is applied after an ARP unit to provide additional protection to the lamination tool.

11. The method according to any one of claims 1 to 10 wherein said partial drying step is carried out with near infrared (NIR) irradiation.

12. The method according to any one of claims 1 to 11 wherein an overlay paper is attached to the surface of the composite paper.

13. The method according to claim 12 wherein the overlay paper is not impregnated, or as a coating of melamine, or a coating of melamine formaldehyde.

14. The method according to any of claims 1 to 13 wherein a lacquer is applied to the composite paper before any hot pressing thereof.

15. The method according to any one of claims 1 to 14 including applying a lacquer to the laminate surface after hot pressing.

16. The method according to claim 15 wherein the lacquer is applied after cutting the hot pressed panel into smaller pieces, preferably after the smaller pieces have had further profiling.

17. The method according to claims 15 and 16 wherein the lacquer is applied by vacuum deposition, preferably to more than one surface of the laminate

18. A laminate product incorporating a highly transparent abrasion and scratch resistant overlay or a highly transparent abrasion and scratch resistant decor paper surface, the overlay or decor paper surface comprising a dried and at least partially cured composite paper that includes :-
a paper substrate impregnated with a first resin and partially dried;
applying a coating on both sides of said impregnated paper substrate, said coating comprising a second resin compatible with the first resin; and
over said coating, a liquid resin layer containing hard particles for abrasion resistance; and
optionally a protective coating applied to the composite paper.

19. A laminate product according to claim 18 further including a lacquer coating applied to one or more surfaces of the laminate product after hot pressing, preferably after the laminate has been cut into smaller pieces and preferably after the smaller pieces have been further profiled; the lacquer coating preferably applied by vacuum deposition.

## Patentansprüche

1. Herstellungsverfahren für einen Schichtstoff, der eine stark transparente, verschleiß- und kratzfeste Deckschicht oder eine stark transparente, verschleiß- und kratzfeste Zierpapierfläche enthält, wobei das Herstellungsverfahren folgendes umfasst:
das Imprägnieren eines Papiers mit einem ersten Harz zur Herstellung eines imprägnierten Papiersubstrats in einem ersten Zustand;
das teilweise Trocknen des imprägnierten Papiersubstrats in dem ersten Zustand;
das Aufbringen von mindestens einer Beschichtung eines zweiten Harzes, das mit dem ersten Harz kompatibel ist, auf das teilweise getrocknete Substrat in dem ersten Zustand;
das Aufbringen einer flüssigen Harzschicht auf die mindestens eine Beschichtung in einem Nass-in-Nass-Verfahren, wobei die Harzschicht harte Teilchen für die Abriebfestigkeit enthält, wodurch ein Verbundpapier hergestellt wird;
das Trocknen und zumindest teilweise Aushärten des Verbundpapiers zu dem erforderlichen B-Zustand; und
das Bilden eines das Verbundpapier umfassenden Schichtstoffs in einer Heißpresse.

2. Verfahren nach Anspruch 1, wobei die Beschichtung des zweiten Harzes auf beide Seiten des imprägnierten und teilweise getrockneten Papiersubstrats im ersten Zustand aufgebracht wird und das zweite Harz gegebenenfalls teilweise getrocknet wird.

3. Verfahren nach Anspruch 2, wobei die Beschichtung des zweiten Harzes teilweise unter Anwendung von UV-Strahlung aushärtbar ist.

4. Verfahren nach einem der Ansprüche 1 bis 3, wobei das Beschichtungsharz harte Teilchen, Zusatzstoffe auf Cellulosebasis, antimikrobielle, antistatische, leitfähige und/oder laserempfindliche Zusatzstoffe enthält.

5. Verfahren nach Anspruch 4, wobei die harten Teilchen des Beschichtungsharzes aus Korund, Glas oder synthetischen Teilchen ausgewählt sind.

6. Verfahren nach Anspruch 5, wobei die Korundteilchen des Beschichtungsharzes eine Größe von nicht mehr als 50 µm haben.

7. Verfahren nach Anspruch 1, wobei die harten Teilchen der flüssigen Harzschicht Korund sind.

8. Verfahren nach Anspruch 7, wobei die Korundteilchen in der flüssigen Harzschicht eine Größe von mehr als 20 µm aufweisen.

9. Verfahren nach einem der Ansprüche 5 bis 8, wobei die Korundteilchen ausgerichtet werden, indem das Verbundpapier zwischen einer sich hinter einer ARP-Einheit befindenden Kathode 20 und Anode durchgeführt werden.

10. Verfahren nach Anspruch 1, wobei nach einer ARP-Einheit eine Schutzbeschichtung aufgebracht wird, um einen zusätzlichen Schutz für das Laminierwerkzeug zur Verfügung zu stellen.

11. Verfahren nach einem der Ansprüche 1 bis 10, wobei der teilweise Trocknungsschritt mit naher Infrarot-Bestrahlung (NIR) durchgeführt wird.

12. Verfahren nach einem der Ansprüche 1 bis 11, wobei ein Deckpapier an der Oberfläche des Verbundpapiers angebracht wird.

13. Verfahren nach Anspruch 12, wobei das Deckpapier nicht imprägniert ist oder eine Beschichtung von Melamin oder eine Beschichtung von Melaminformaldehyd aufweist.

14. Verfahren nach einem der Ansprüche 1 bis 13, wobei ein Lack auf das Verbundpapier aufgebracht wird, bevor dieses heißgepresst wird.

15. Verfahren nach einem der Ansprüche 1 bis 14, umfassend das Aufbringen eines Lacks auf die Schichtstofffläche nach dem Heißpressen.

16. Verfahren nach Anspruch 15, wobei der Lack nach dem Schneiden der heißgepressten Platte in kleinere Stücke aufgebracht wird, vorzugsweise nachdem die kleineren Stücke einer weiteren Formarbeit unterworfen wurden.

17. Verfahren nach den Ansprüchen 15 und 16, wobei der Lack durch Vakuumbeschichtung aufgebracht wird, vorzugsweise auf mehr als eine Oberfläche des Schichtstoffs.

18. Schichtstoffprodukt, das eine stark transparente, verschleiß- und kratzfeste Deckschicht oder eine stark transparente, verschleiß- und kratzfeste Zierpapierfläche enthält, wobei die Deckschicht oder die Zierpapierfläche ein getrocknetes und zumindest teilweise gehärtetes Verbundpapier aufweist, welches folgendes umfasst:
ein Papiersubstrat, das mit einem ersten Harz imprägniert und teilweise getrocknet ist;
Aufbringen einer Beschichtung auf beiden Seiten des imprägnierten Papiersubstrats, wobei die Beschichtung ein zweites Harz aufweist, das mit dem ersten Harz kompatibel ist; und
über der Beschichtung eine flüssige Harzschicht, die harte Teilchen für die Abriebfestigkeit aufweist; und
gegebenenfalls eine Schutzbeschichtung, die auf das Verbundpapier aufgebracht ist.

19. Schichtstoffprodukt nach Anspruch 18, welches des Weiteren eine Lackschicht aufweist, die nach dem Heißpressen auf eine oder mehrere Oberflächen des Schichtstoffproduktes aufgebracht wird, vorzugsweise nachdem der Schichtstoff in kleinere Stücke geschnitten wurde und vorzugsweise nachdem die kleineren Stücke weiter in Form gearbeitet wurden; wobei die Lackschicht vorzugsweise durch Vakuumbeschichtung aufgebracht wird.

## Revendications

1. Procédé de fabrication d'un stratifié comprenant un overlay à haute transparence, résistant à l'abrasion et à la rayure, ou une surface en papier décor à haute transparence, résistante à l'abrasion et à la rayure, comprenant :
- l'imprégnation d'un papier avec une première résine pour produire un substrat de papier imprégné du premier stade ;
- le séchage partiel du substrat de papier imprégné du premier stade ;
- l'application, sur le substrat du premier stade partiellement séché, d'au moins un revêtement en une deuxième résine, compatible avec la première résine ;
- l'application, sur ledit ou lesdits revêtement(s), dans un procédé mouillé sur mouillé, d'une couche de résine liquide contenant des particules dures pour la résistance à l'abrasion, de façon à produire un papier composite ;
- le séchage et le durcissement au moins partiel dudit papier composite jusqu'au stade b requis ; et
- la formation, dans une presse à chaud, d'un stratifié comprenant le papier composite.

2. Procédé selon la revendication 1, dans lequel ledit revêtement en la deuxième résine est appliqué sur les deux faces du substrat de papier imprégné et partiellement séché du premier stade, et la deuxième résine est en option partiellement séchée.

3. Procédé selon la revendication 2, dans lequel ledit revêtement en la deuxième résine est partiellement durcissable par utilisation d'un rayonnement UV.

4. Procédé selon l'une quelconque des revendications 1 à 3, dans lequel la résine du revêtement contient un ou plusieurs quelconque de particules dures, d'additifs à base de cellulose, antimicrobiens, antistatiques, conducteurs ou sensibles au laser.

5. Procédé selon la revendication 4, dans lequel les particules dures de la résine de revêtement sont choisies parmi les particules de corindon, de verre ou synthétiques.

6. Procédé selon la revendication 5, dans lequel les particules de corindon de la résine de revêtement ont une granulométrie non supérieure à 50 µm.

7. Procédé selon la revendication 1, dans lequel les particules dures de la couche de résine liquide sont en corindon.

8. Procédé selon la revendication 7, dans lequel les particules de corindon de la couche de résine liquide ont une granulométrie supérieure à 20 µm.

9. Procédé selon l'une quelconque des revendications 5 à 8, dans lequel les particules de corindon sont alignées par passage du papier composite entre une cathode et une anode situées après une unité ARP.

10. Procédé selon la revendication 1, dans lequel un revêtement protecteur est appliqué après une unité ARP pour fournir une protection additionnelle à l'outil de stratification.

11. Procédé selon l'une quelconque des revendications 1 à 10, dans lequel ladite étape de séchage partiel est mise en oeuvre par exposition à un rayonnement infrarouge proche (NIR).

12. Procédé selon l'une quelconque des revendications 1 à 11, dans lequel un papier overlay est fixé à la surface du papier composite.

13. Procédé selon la revendication 12, dans lequel le papier overlay n'est pas imprégné, ou se présente sous forme d'un revêtement de mélamine ou d'un revêtement de mélamine-formaldéhyde.

14. Procédé selon l'une quelconque des revendications 1 à 13, dans lequel un vernis est appliqué sur le papier composite avant tout pressage à chaud de ce dernier.

15. Procédé selon l'une quelconque des revendications 1 à 14, comprenant l'application d'un vernis sur la surface du stratifié après le pressage à chaud.

16. Procédé selon la revendication 15, dans lequel le vernis est appliqué après découpe du panneau pressé à chaud en morceaux plus petits, de préférence après que les morceaux plus petits ont subi un profilage plus poussé.

17. Procédé selon les revendications 15 et 16, dans lequel le vernis est appliqué par dépôt sous vide, de préférence sur plus d'une surface du stratifié.

18. Produit stratifié comprenant un overlay hautement transparent, résistant à l'abrasion et à la rayure, ou une surface de papier décor hautement transparente, résistant à l'abrasion et à la rayure, le overlay ou la surface de papier décor comprenant un papier composite séché et au moins partiellement durci, qui comprend :
- un substrat de papier imprégné d'une première résine et partiellement séché ;
- l'application d'un revêtement sur les deux faces dudit substrat de papier imprégné, ledit revêtement comprenant une deuxième résine compatible avec la première résine ; et
- au-dessus dudit revêtement, une couche de résine liquide contenant des particules dures pour la résistance à l'abrasion ; et
- en option, un revêtement protecteur appliqué sur le papier composite.

19. Produit stratifié selon la revendication 18, comprenant en outre un revêtement de vernis appliqué sur une ou plusieurs surfaces du produit de stratifié après le pressage à chaud, de préférence après que le stratifié a été découpé en morceaux plus petits et de préférence après que les morceaux plus petits ont subi un profilage plus poussé ; le revêtement de vernis étant de préférence appliqué par dépôt sous vide.
